# EUROPEAN PATENT SPECIFICATION

(11) **EP 1 686 813 B1**
(45) Date of publication and mention of the grant of the patent: **16.07.2008**
(21) Application number: 05300075.8
(22) Date of filing: 31.01.2005
(51) Int. Cl.: H04Q 3/00

(54) **signalling point**
Zeichengabepunkt
Point de signalisation

(43) Date of publication of application: 02.08.2006
(73) Proprietor: Hewlett-Packard Development Company, L.P., Houston, Texas 77070 (US)
(72) Inventor: Morandi, Sylvain, 38053, Grenoble Cedex 09 (FR); Schneider, Yves, 38053, Grenoble Cedex 09 (FR); Lagesse, Patrick, 38053, Grenoble Cedex 09 (FR)
(74) Representative: Lloyd, Richard Graham

(56) References cited:
- EP-A- 0 912 068
- US-A1- 2004 015 964

## Description

### FIELD OF THE INVENTION

The invention relates to methods, and related apparatus, for controlling signalling points, such as signalling gateways, in signalling networks.

### BACKGROUND OF THE INVENTION

Establishing connections between two telephones involves a complex interaction of digital messages, hereinafter referred to generally as signalling. Nowadays telephone systems perform what is known as "out-of-band" signalling. Out-of-band signalling means that the communications required between the switches and other equipment in the network take place on communication channels other than the channel by which the voice or data flows. Typically, the out-of-band signalling takes place by means of digital communication channels. Thus, the public switched telephone network (PSTN) generally uses two types of channels, media and signalling.

Several protocols have been defined for out-of-band signalling. The most commonly used protocol, in North America, Asia and Europe, is known as Signalling System No. 7 (SS7). However, the SS7 protocol defines more than just a protocol for communication between switches. It also defines an entire switching network for facilitating signalling for call establishment, routing, and information exchange functions of switched circuit networks.

Since the amount of data transferred over data networks is now much larger than the voice traffic that is carried over the PSTN, carriers are in the process of consolidating both types of networks. In addition, telecommunication networks are increasingly making use of standard computing hardware in order to reduce IT costs.

Therefore, there is a trend in the telephone industry to migrate telephone systems using SS7-based networks for signalling to Internet Protocol (IP) networks. The Internet protocols are standardised by the Internet Engineering Task Force (IETF). Moving either or both of the media and signalling channels to an IP infrastructure involves the use of very different technologies and can be done independently. One IETF working group, called the SIGTRAN Group, is defining the protocols for back-hauling SS7 signalling messages across IP networks. Generally speaking, signalling across an IP network involves replacing the lower levels of the SS7 layered protocol communications and transport layers with IP network protocol communications and transport layers.

The IETF in collaboration with the SIGTRAN group have taken the initiative to define open standards for transporting SS7 over IP networks. With SIGTRAN technology, telephone services which today lie on top of SS7 networks, can run Application Servers (ASs) lying on top of IP networks. The interworking with SS7 networks is performed by SIGTRAN signalling gateways (SGs).

To enhance the availability of the signalling gateway, it can be distributed over several processes running in one or several computers, each of them being a Signalling Gateway Process (SGP). Every SGP belonging to a particular SG has the same SS7 point code (or the same list of PCs), with each SGP being connected to the SS7 network through redundant links.

On the IP side, each SGP is connected to Application Servers running the services. Each Application Server, which can typically be identified with a single logical service, such as a Short Message Service **Centre (SMSC), can be implemented in a distributed manner by one or more processes or computers - referred to as the Application Server Processes (ASPs). To provide improved reliability, each SGP is** typically directly connected to each ASP through an SCTP association such that there is one association between each SGP and each ASP.

The Message Transfer Part (MTP) of the SS7 set of protocols serves for the transmission of the signalling messages and is arranged to ensure that signalling messages normally take the same route through the signalling network and in this way cannot overtake one another (see, for example, ITU recommendations Q. 701 through Q. 706). Thus the signalling points are arranged so that signalling messages with a specific value in the signalling link selection field (SLS or SLS value) are always sent by MTP to a specific destination via the same signalling link in a given signalling link set, i.e., there is normally a fixed relationship between the SLS value of a message and an outbound signalling link of a signalling link set. Various techniques can then be employed to manage the situation where a signalling link goes out of service by reallocating messages having specific SLS values to other signalling links.

In the relevant SIGTRAN standard (M3UA) defined by RFC3332, the Protocol Data parameter contains a Signalling Link Selection parameter comprising 8 bits (unsigned integer). The Signalling Link Selection field contains the SLS bits from a routing label of an SS7 message justified to the least significant bit and in Network Byte Order. Unused bits are coded '0'.

Thus in IP networks, the full 8 bits of the SLS parameter of an M3UA data message can be used, for instance, to select the SCTP association and the stream to send the message over the IP network.

In SS7 networks on the other hand, the SLS parameter can have a different encoding according to the applicable variant of the SS7 standards. For instance, in ANSI 88 networks the SLS parameter is coded on 8 bits, but only 5 bits are used; in ANSI 96 networks, the SLS parameter is coded on 8 bits and the full 8 bits can be used; in ITU-T networks, the SLS parameter is coded on 4 bits only and in China, the SLS parameter is coded on 8 bits but only 4 bits are used.

As the bandwidth of a modem IP network is typically much greater than that of legacy SS7 network, it is desirable to make use of the full 8 bits of the SLS parameter to enable a Signalling Gateway to loadshare the signalling traffic coming from the Application Servers over multiple outgoing linksets, each of which have a relatively limited bandwidth in legacy SS7 networks. For instance, in ITU and Chinese networks 16 linksets of 16 data links can be used and in ANSI networks 8 linksets of 16 data links can be used.

US 2004/0015964 describes methods and systems for load sharing signaling messages among signaling links in a network utilizing an international signaling protocol, such as the ITU signaling protocol. The signal transfer point generates a signaling link selection parameter for the signaling message by rotating bits of a predetermined field of the signaling message, replacing bits in a predetermined field of the signaling message, rotating and replacing bits in a predetermined field in the signaling message, or generating a random number in response to receiving the signaling message. The signaling link selection parameter is then used to select an outbound signaling link. Because the outbound signaling link is selected based on a generated parameter, rather than fixed parameter in the signaling message, load sharing among signaling links is more effectively performed.

### SUMMARY OF THE INVENTION

This invention relates to a routing process which allows a signalling point, such as a SIGTRAN Signalling Gateway, to distribute traffic over an available set of outgoing linksets and that serves to mitigate certain phenomena associated with the uneven distribution of messages.

To achieve this the invention provides a method, a signalling point for a signalling network and a computer program product for controlling a signalling gateway, as set out in the claims.

In preferred embodiments, the signalling point is a signalling gateway linking an SS7 network and an IP network although it will be understood that application of the technique to similar or comparable environments is not excluded.

### BRIEF DESCRIPTION OF THE DRAWINGS

Embodiments of the invention will now be described by way of example only with reference to the accompanying drawings, wherein:
Figure 1 illustrates a signalling point and an SS7 network;
Figure 2 is a flow diagram illustrating the steps of a method.

### DETAILED DESCRIPTION OF THE INVENTION

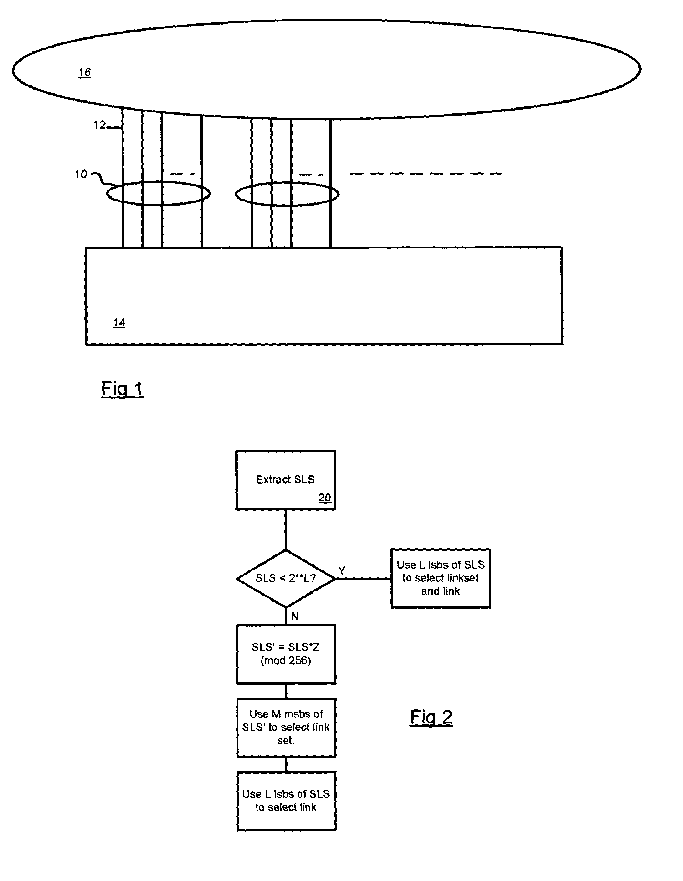

In FIG. 1, there is shown a set of linksets 10 each having M links 12 coupling a signalling point 14, which could be, for instance, a SIGTRAN signalling gateway, and an SS7 network 16. Where such an arrangement accords with applicable ANSI Specifications, each linkset 10 currently would have a maximum of sixteen links 12. Signalling point 14, is assumed to receive signalling messages from a sender (not shown) that could be a separate IP network in the case of a SIGTRAN gateway, but which could also be internal to the signalling network 16.

As is well known, the SS7 mechanism for distributing message traffic among M links in a linkset 10 is to use a field in the signalling messages called the signalling link selection parameter (SLS).

It should be noted that the distribution of the values of signalling link selection parameters in incoming messages is assumed to be balanced by the sender - which in this example might be a SIGTRAN application server process (not shown) - prior to sending messages to signalling point 14. Signalling point 14 examines the signalling link selection code of each message and then determines outbound linkset and link identifiers and then dispatches the message in the corresponding link. As is well known it is a requirement that the signalling points are arranged so that signalling messages with a specific value in the signalling link selection field are always sent to a specific destination via the same signalling link in a given signalling link set, i.e., there is normally a fixed relationship between the SLS value of a message and an outbound signalling link and signalling link set.

Table I below shows an exemplary prior art signalling link selection code assignment, that is the linkset and data link ID selection sequence for a SLS growing linearly from 0 to 31, in the form Linkset 10 ID .data_link 12 ID (L.I), in the case of an ANSI 88 compatible SS7 network in the case where two signalling points are interconnected by two linksets that each comprise 16 links. In this standard example, the SLS value is taken to select the linkset and the data link in a given linkset modulo the number of linksets or links available.

**Table I (PIOR ART)**

| SLS | L.I | SLS | L.I | SLS | L.I | SLS | L.I |
|---|---|---|---|---|---|---|---|
| 0 | 0.0 | 8 | 0.8 | 16 | 0.0 | 24 | 0.8 |
| 1 | 1.1 | 9 | 1.9 | 17 | 1.1 | 25 | 1.9 |
| 2 | 0.2 | 10 | 0.10 | 18 | 0.2 | 26 | 0.10 |
| 3 | 1.3 | 11 | 1.11 | 19 | 1.3 | 27 | 1.11 |
| 4 | 0.4 | 12 | 0.12 | 20 | 0.4 | 28 | 0.12 |
| 5 | 1.5 | 13 | 1.13 | 21 | 1.5 | 29 | 1.13 |
| 6 | 0.6 | 14 | 0.14 | 22 | 0.6 | 30 | 0.14 |
| 7 | 1.7 7 | 15 | 1.15 | 23 | 1.7 | 31 | 1.15 |

For large link configurations, where the SLS parameter is coded on the full 8 bits, the most straightforward approach to selecting a linkset/link combination directly from the SLS value in a manner that provides backwards compatibility would be to use the M most significant bits of the SLS to select the linkset and L least significant bits used to select the link within the linkset where L is the number of bits used to encode the SLS parameter for the situation for which backwards compatibility is sought. The problem of such an approach is that the traffic is not evenly distributed in time on the routes in the case that a sender, such as an application server, balances the SLS values by generating SLS values sequentially across the full range of possible values as is often the case. In this case, the above-described simple routing algorithm would generate bursts of consecutive messages on the same linksets. These bursts can cause congestion problems at the data link level of the adjacent SS7 Point Code and possibly lead to link failure or loss of messages.

This can be understood by reference to Table II which shows the selected linkset and data link identifiers generated using the above-described approach for an 8 bits SLS for the largest ANSI configuration comprising 8 linksets of 16 data links each for the first 128 SLS values only.

It can be seen from Table II that in some cases the linkset id stays unchanged with the SLS value during 32 consecutive values.

A similar behaviour can be observed for ITU-T and China with 16 linksets of 16 data links each.

| SLS | L.I | SLS | L.I | SLS | L.I | SLS | L.I | SLS | L.I | SLS | L.I | SLS | L.I | SLS | L.I |
|---|---|---|---|---|---|---|---|---|---|---|---|---|---|---|---|
| 0 | 0.0 | 8 | 0.8 | 16 | 0.0 | 24 | 0.8 | 32 | 1.0 | 40 | 1.8 | 48 | 1.0 | 56 | 1.8 |
| 1 | 1.1 | 9 | 1.9 | 17 | 1.1 | 25 | 1.9 | 33 | 1.1 | 41 | 1.9 | 49 | 1.1 | 57 | 1.9 |
| 2 | 2.2 | 10 | 2.10 | 18 | 2.2 | 26 | 2.10 | 34 | 1.2 | 42 | 1.10 | 50 | 1.2 | 58 | 1.10 |
| 3 | 3.3 | 11 | 3.11 | 19 | 3.3 | 27 | 3.11 | 35 | 1.3 | 43 | 1.11 | 50 | 1.3 | 59 | 1.11 |
| 4 | 4.4 | 12 | 4.12 | 20 | 4.4 | 28 | 4.12 | 36 | 1.4 | 44 | 1.12 | 52 | 1.4 | 60 | 1.12 |
| 5 | 5.5 | 13 | 5.13 | 21 | 5.5 | 29 | 5.13 | 37 | 1.5 | 45 | 1.13 | 53 | 1.5 | 61 | 1.13 |
| 6 | 6.6 | 14 | 6.14 | 22 | 6.6 | 30 | 6.14 | 38 | 1.6 | 46 | 1.14 | 54 | 1.6 | 62 | 1.14 |

**Table II**

| | | | | | | | | | | | | | | | |
|---|---|---|---|---|---|---|---|---|---|---|---|---|---|---|---|
| 7 | 7.7 | 15 | 7.15 | 23 | 7.7 | 31 | 7.15 | 39 | 1.7 | 47 | 1.15 | 55 | 1.7 | 63 | 1.15 |

| SLS | L.I | SLS | L.I | SLS | L.I | SLS | L.I | SLS | L.I | SLS | L.I | SLS | L.I | SLS | L.I |
|---|---|---|---|---|---|---|---|---|---|---|---|---|---|---|---|
| 64 | 2.0 | 72 | 2.8 | 80 | 2.0 | 88 | 2.8 | 96 | 3.0 | 104 | 3.8 | 112 | 3.0 | 120 | 3.8 |
| 65 | 2.1 | 73 | 2.9 | 81 | 2.1 | 89 | 2.9 | 97 | 3.1 | 105 | 3.9 | 113 | 3.1 | 121 | 3.9 |
| 66 | 2.2 | 74 | 2.10 | 82 | 2.2 | 90 | 2.10 | 98 | 3.2 | 106 | 3.10 | 114 | 3.2 | 122 | 3.10 |
| 67 | 2.3 | 74 | 2.11 | 83 | 2.3 | 91 | 2.1 | 99 | 3.3 | 107 | 3.11 | 115 | 3.3 | 123 | 3.11 |
| 68 | 2.4 | 76 | 2.12 | 84 | 2.4 | 92 | 2.12 | 100 | 3.4 | 108 | 3.12 | 116 | 3.4 | 123 | 3.12 |
| 69 | 2.5 | 77 | 2.13 | 85 | 2.5 | 93 | 2.13 | 101 | 3.5 | 109 | 3.13 | 117 | 3.5 | 125 | 3.13 |
| 70 | 2.6 | 78 | 2.14 | 86 | 2.6 | 94 | 2.14 | 102 | 3.6 | 110 | 3.14 | 118 | 3.6 | 126 | 3.14 |
| 71 | 2.7 | 79 | 2.15 | 87 | 2.7 | 95 | 2.15 | 103 | 3.7 | 111 | 3.15 | 119 | 3.7 | 127 | 3.15 |

There will now be described a link selection method that mitigates the above described drawback.

### The steps of the method are illustrated in Fig 2 and are as follows:

First a message is received and the SLS value extracted in generally known manner - step 20. If the SLS value is less than a value 2**L where L is the number of bits used to encode the SLS value for a backward compatible mode. When the SLS is coded on 8 bits for instance, L= 5 and the maximum backward compatible SLS value that guarantees the backward compatibility with all the releases of a same MTP3 protocol variant (ANSI or ITU-T) is 32 and for ITU & China, L=4.

In this backward compatible mode, the L lsb bits of the SLS value are used to select both the linkset and the data link in the linkset so that the messages are evenly distributed between the linksets.

If the SLS value is greater or equal than L**2, the input SLS value is multiplied by a parameter Z modulo 256 and the M msb bits of the result are used to select the linkset. Finally the L lsb bits of the initial SLS value are used to select the data link in the linkset with (M=3, L=5) for ANSI and (M=L=4) for ITU & China.

The value of Z can be equal to the maximum backward compatible value of the SLS plus one: i.e. Z = 2**L + 1 , i.e 33 with L=5 for ANSI and 17 with L=4 for ITU & China.

The multiplication by Z of the incoming SLS value introduces an offset that modifies the linkset id for each initial SLS value preserving an evenly uniform distribution of the linkset ids so as to obtain a linkset sequence that is more evenly distributed over time.

Table III shows the selected linkset and link ids according to the initial SLS value for the largest ANSI configuration: 8 linksets with 16 data links each (only the first 128 SLS values are shown in Table III):

| SLS | L.I | SLS | L.I | SLS | L.I | SLS | L.I | SLS | L.I | SLS | L.I | SLS | L.I | SLS | L.I |
|---|---|---|---|---|---|---|---|---|---|---|---|---|---|---|---|
| 0 | 0.0 | 8 | 0.8 | 16 | 0.0 | 24 | 0.8 | 32 | 1.0 | 40 | 1.8 | 48 | 1.0 | 56 | 1.8 |
| 1 | 1.1 | 9 | 1.9 | 17 | 1.1 | 25 | 1.9 | 33 | 2.1 | 41 | 2.9 | 49 | 2.1 | 57 | 2.9 |
| 2 | 2.2 | 10 | 2.10 | 18 | 2.2 | 26 | 2.10 | 34 | 3.2 | 42 | 3.10 | 50 | 3.2 | 58 | 3.10 |
| 3 | 3.3 | 11 | 3.11 | 19 | 3.3 | 27 | 3.11 | 35 | 4.3 | 43 | 4.11 | 50 | 4.3 | 59 | 4.11 |
| 4 | 4.4 | 12 | 4.12 | 20 | 4.4 | 28 | 4.12 | 36 | 5.4 | 44 | 5.12 | 52 | 5.4 | 60 | 5.12 |
| 5 | 5.5 | 13 | 5.13 | 21 | 5.5 | 29 | 5.13 | 37 | 6.5 | 45 | 6.13 | 53 | 6.5 | 61 | 6.13 |
| 6 | 6.6 | 14 | 6.14 | 22 | 6.6 | 30 | 6.14 | 38 | 7.6 | 46 | 7.14 | 54 | 7.6 | 62 | 7.14 |
| 7 | 7.7 | 15 | 7.15 | 23 | 7.7 | 31 | 7.15 | 39 | 0.7 | 47 | 0.15 | 55 | 0.7 | 63 | 0.15 |
| SLS | L.I | SLS | L.I | SLS | L.I | SLS | L.I | SLS | L.I | SLS | L.I | SLS | L.I | SLS | L.I |
| 64 | 2.0 | 72 | 2.8 | 80 | 2.0 | 88 | 2.8 | 96 | 3.0 | 104 | 3.8 | 112 | 3.0 | 120 | 3.8 |
| 65 | 3.1 | 73 | 3.9 | 81 | 3.1 | 89 | 3.9 | 97 | 4.1 | 105 | 4.9 | 113 | 4.1 | 121 | 4.9 |
| 66 | 4.2 | 74 | 4.10 | 82 | 4.2 | 90 | 4.10 | 98 | 5.2 | 106 | 5.10 | 114 | 5.2 | 122 | 5.10 |
| 67 | 5.3 | 74 | 5.11 | 83 | 5.3 | 91 | 5.11 | 99 | 6.3 | 107 | 6.11 | 115 | 6.3 | 123 | 6.11 |
| 68 | 6.4 | 76 | 6.12 | 84 | 6.4 | 92 | 6.12 | 100 | 7.4 | 108 | 7.12 | 116 | 7.4 | 123 | 7.12 |
| 69 | 7.5 | 77 | 7.13 | 85 | 7.5 | 93 | 7.13 | 101 | 0.5 | 109 | 0.13 | 117 | 0.5 | 125 | 0.13 |
| 70 | 0.6 | 78 | 0.14 | 86 | 0.6 | 94 | 0.14 | 102 | 1.6 | 110 | 1.14 | 118 | 1.6 | 126 | 1.14 |
| 71 | 1.7 | 79 | 1.15 | 87 | 1.7 | 95 | 1.15 | 103 | 2.7 | 111 | 2.15 | 119 | 2.7 | 127 | 2.15 |

It can be seen that the selected linkset id changes with the SLS value and, where the SLS value grows sequentially, the traffic would be evenly distributed in time over on all routes without generating bursts of messages on any particular route. The underlined values are the distribution on linkset 0, for instance.

A similar behaviour can be obtained for the encodings for ITU-T and Chinese variants with 16 linksets of 16 data links each.

In this way traffic can be evenly loadshared on the available routes and links avoiding congestion of adjacent SS7 network nodes. The CPU cost of calculating the link and linkset ID from the SLS value is low and the above described technique can provide backward compatibility with all the protocol releases and variants of MTP3, ANSI 88, ANSI 96, ITU-T White Book, Blue Book, Red Book and China.

It will be understood that the same method can be used by an SUA Signalling Gateway to route SCCP class 0 messages coming from a SUA AS to route on SS7 via MTP3 or in any other similar or comparable circumstances.

The foregoing discussion is premised upon one of ordinary skill in the art having a working understanding of the character and format of switching signals in the SS7 network, as well as the character and nature of converting SS7 signals for transport across IP networks. For additional information regarding SS7 network switching over IP networks, reference may be made to the (IETF) working drafts "Signalling Connecting Control Part User Adaptation Layer (SUA)" available from the IETF website at www.ietf.org, and IETF RFC 3332 "SS7 MTP3 - User Adaptation Layer (M3UA)", available from the IETF website, and which is incorporated herein by reference as if reproduced in full. It is noted that each of these IETF documents is a work in progress and is therefore subject to change. However, these documents exemplify the changes necessary to a standard SS7 signalling system for its implementation in an IP network context. As well as defining the functions of signalling gateways and signalling gateway processes, the SIGTRAN documents referred to above specify in detail the protocols to be implemented between an SGP and an ASP.

More general background information regarding SIGTRAN protocols, reference may be made to the International Engineering Consortium, in document "SS7 Over IP Signalling Transport and SCTP," which is available from the IEC website www.iec.org, and which is incorporated herein by reference as if reproduced in full.

It will be appreciated that commercialised forms of the present embodiment would in practice take the form of a set of computer programs adapted to run on specialised telecommunications platforms within general or special purpose operating environments such as are provided by the Linux or HP-UX operating systems and their related programming libraries and tools. These programs may be marketed in the form of suitably coded computer program products including program code elements that implement the functionality described. It will be appreciated though that the techniques described may equally be implemented as special purpose hardware or any combination of software, hardware and/or firmware.

The above discussion is meant to be illustrative of the principles and various embodiments of the present invention. Numerous variations and modifications in each of the illustrated examples will become apparent to those skilled in the art once the above disclosure is fully appreciated. It is intended that the following claims be interpreted to embrace all such variations and modifications.

## Claims

1. A method for controlling a signalling point in a signalling network to identify, using the value of a signalling link selection field within a message, a signalling link and a signalling linkset for forwarding the message, the method comprising:
dividing the value into a most significant portion and a least significant portion;
deriving an identifier for the signalling link from the least significant portion; **characterised by**
if the value is within a first range, deriving an identifier for the specific signalling linkset from the least significant portion of the value;
if the value is within a second range; determining a quantity which is a function of the value and deriving an identifier for the specific signalling linkset from the most significant portion of the quantity, wherein the function is such that successive values of signalling link selection field are mapped to different values of the linkset identifier.

2. A method as claimed in claim 1 wherein the function is a multiplication modulo 256 by a fixed parameter.

3. A method as claimed in claim 2 wherein the first range is values less than the fixed parameter minus 1 and the second range is values equal to or greater than the fixed parameter.

4. A method as claimed in claim 3 wherein the fixed parameter is 33.

5. A method as claimed in claim 3 wherein the fixed parameter is 17.

6. A method as claimed in any preceding claim wherein the signalling point is a signalling gateway linking an SS7 network and an IP network.

7. A signalling point for a signalling network comprising an arrangement for identifing, using the value of a signalling link selection field within a message, a signalling link and a signalling linkset for forwarding the message, the arrangement comprising the steps of:
logic for dividing the value into a most significant portion and a least significant portion;
logic for deriving an identifier for the signalling link from the least significant portion; **characterised by**,
logic for determining if the value is within a first range and if so deriving an identifier for the specific signalling linkset from the least significant portion of the value;
logic for determining if the value is within a second range and , if so, determining a quantity which is a function of the value and deriving an identifier for the specific signalling linkset from the most significant portion of the quantity, wherein the function is such that successive values of signalling link selection field are mapped to different values of the linkset identifier.

8. A signalling point as claimed in claim 7 wherein the function is a multiplication modulo 256 by a fixed parameter.

9. A signalling point as claimed in claim 8 wherein the first range is values less than the fixed parameter minus 1 and the second range is values equal to or greater than the fixed parameter.

10. A signalling point as claimed in claim 9 wherein the fixed parameter is 33.

11. A signalling point as claimed in claim 9 wherein the fixed parameter is 17.

12. A signalling point as claimed in any of claims 7 to 11 wherein the signalling point is a signalling gateway linking an SS7 network and an IP network.

13. A method as claimed in claim 3 wherein the fixed parameter is 33.

14. A method as claimed in claim 3 wherein the fixed parameter is 17.

15. A computer program product for controlling a signalling gateway linking an SS7 network and an IP network point to identify, using the value of a signalling link selection field within a message, a signalling link and a signalling linkset for forwarding the message to the SS7 network, the program product comprising program code elements for:
dividing the value into a most significant portion and a least significant portion;
deriving an identifier for the signalling link from the least significant portion; **characterised in that** the elements are arranged to,
if the value is less than a fixed parameter minus 1, derive an identifier for the specific signalling linkset from the least significant portion of the value;
if the value is greater than the fixed parameter, multiply the value modulo 256 by the fixed parameter and derive an identifier for the specific signalling linkset from the most significant portion of the result.

16. A product as claimed in claim 15 wherein the fixed parameter is 33.

17. A product as claimed in claim 15 wherein the fixed parameter is 17.

## Patentansprüche

1. Ein Verfahren zum Steuern eines Signalisierungspunktes in einem Signalisierungsnetz, um unter Verwendung des Wertes eines Signalisierungsverbindungsauswahlfeldes in einer Nachricht eine Signalisierungsverbindung und einen Signalisierungsverbindungssatz zum Weiterleiten der Nachricht zu identifizieren, wobei das Verfahren folgende Schritte aufweist:
Unterteilen des Wertes in einen höchstwertigen Abschnitt und einen niedrigstwertigen Abschnitt;
Ableiten eines Identifizierers für die Signalisierungsverbindung aus dem niedrigstwertigen Abschnitt; **gekennzeichnet durch**
ein Ableiten eines Identifizierers für den spezifischen Signalisierungsverbindungssatz aus dem niedrigstwertigen Abschnitt des Wertes, wenn der Wert in einem ersten Bereich ist;
wenn der Wert in einem zweiten Bereich ist; Bestimmen einer Quantität, die eine Funktion des Wertes ist, und Ableiten eines Identifizierers für den spezifischen Signalisierungsverbindungssatz aus dem höchstwertigen Abschnitt der Quantität, wobei die Funktion derart ist, dass aufeinanderfolgende Werte eines Signalisierungsverbindungsauswahlfeldes auf unterschiedliche Werte des Verbindungssatzidentifizierers abgebildet werden.

2. Ein Verfahren gemäß Anspruch 1, bei dem die Funktion eine Multiplikation Modulo 256 mit einem festen Parameter ist.

3. Ein Verfahren gemäß Anspruch 2, bei dem der erste Bereich geringwertiger als der feste Parameter minus 1 und der zweite Bereich gleichwertig zu oder größer als der feste Parameter ist.

4. Ein Verfahren gemäß Anspruch 3, bei dem der feste Parameter 33 ist.

5. Ein Verfahren gemäß Anspruch 3, bei dem der feste Parameter 17 ist.

6. Ein Verfahren gemäß einem der vorhergehenden Ansprüche, bei dem der Signalisierungspunkt ein Signalisierungsnetzübergang ist, der ein SS7-Netz und ein IP-Netz verbindet.

7. Ein Signalisierungspunkt für ein Signalisierungsnetz, das eine Anordnung zum Identifizieren einer Signalisierungsverbindung und eines Signalisierungsverbindungssatzes unter Verwendung des Wertes eines Signalisierungsverbindungsauswahlfeldes in einer Nachricht zum Weiterleiten der Nachricht aufweist, wobei die Anordnung folgende Merkmale aufweist:
eine Logik zum Unterteilen des Wertes in einen höchstwertigen Abschnitt und einen niedrigstwertigen Abschnitt;
eine Logik zum Ableiten eines Identifizierers für die Signalisierungsverbindung aus dem niedrigstwertigen Abschnitt; **gekennzeichnet durch**
eine Logik zum Bestimmen, ob der Wert in einem ersten Bereich ist, und, falls ja, Ableiten eines Identifizierers für den spezifischen Signalisierungsverbindungssatz aus dem niedrigstwertigen Abschnitt des Wertes;
eine Logik zum Bestimmen, ob der Wert in einem zweiten Bereich ist, und, falls ja, Bestimmen einer Quantität, die eine Funktion des Wertes ist, und Ableiten eines Identifizierers für den spezifischen Signalisierungsverbindungssatz aus dem höchstwertigen Abschnitt der Quantität, wobei die Funktion derart ist, dass aufeinanderfolgende Werte eines Signalisierungsverbindungsauswahlfeldes auf unterschiedliche Werte des Verbindungssatzidentifizierers abgebildet werden.

8. Ein Signalisierungspunkt gemäß Anspruch 7, bei dem die Funktion eine Multiplikation Modulo 256 mit einem festen Parameter ist.

9. Ein Signalisierungspunkt gemäß Anspruch 8, bei dem der erste Bereich geringwertiger als der feste Parameter minus 1 und der zweite Bereich gleichwertig zu oder größer als der feste Parameter ist.

10. Ein Signalisierungspunkt gemäß Anspruch 9, bei dem der feste Parameter 33 ist.

11. Ein Signalisierungspunkt gemäß Anspruch 9, bei dem der feste Parameter 17 ist.

12. Ein Signalisierungspunkt gemäß einem der Ansprüche 7 bis 11, bei dem der Signalisierungspunkt ein Signalisierungsnetzübergang ist, der ein SS7-Netz und ein IP-Netz verbindet.

13. Ein Verfahren gemäß Anspruch 3, bei dem der feste Parameter 33 ist.

14. Ein Verfahren gemäß Anspruch 3, bei dem der feste Parameter 17 ist.

15. Ein Computerprogrammprodukt zum Steuern eines Signalisierungsnetzübergangs, der ein SS7-Netz und ein IP-Netz verbindet, um unter Verwendung des Wertes eines Signalisierungsverbindungsauswahlfeldes in einer Nachricht eine Signalisierungsverbindung und einen Signalisierungsverbindungssatz zum Weiterleiten der Nachricht an das SS7-Netz zu identifizieren, wobei das Programmprodukt Programmcodeelemente aufweist zum:
Unterteilen des Wertes in einen höchstwertigen Abschnitt und einen niedrigstwertigen Abschnitt;
Ableiten eines Identifizierers für die Signalisierungsverbindung aus dem niedrigstwertigen Abschnitt; **dadurch gekennzeichnet, dass** die Elemente angeordnet sind, um
einen Identifizierer für den spezifischen Signalisierungsverbindungssatz aus dem niedrigstwertigen Abschnitt des Wertes abzuleiten, wenn der Wert geringer als ein fester Parameter minus 1 ist;
den Wert Modulo 256 mit dem festen Parameter zu multiplizieren und einen Identifizierer für den spezifischen Signalisierungsverbindungssatz aus dem höchstwertigen Abschnitt des Ergebnisses abzuleiten, wenn der Wert größer als der feste Parameter ist.

16. Ein Produkt gemäß Anspruch 15, bei dem der feste Parameter 33 ist.

17. Ein Produkt gemäß Anspruch 15, bei dem der feste Parameter 17 ist.

## Revendications

1. Procédé pour commander un point de signalisation dans un réseau de signalisation pour identifier, en utilisant la valeur d'un champ de sélection de liaison de signalisation à l'intérieur d'un message, une liaison de signalisation et un faisceau sémaphore de signalisation pour transférer le message, le procédé comprenant les étapes consistant à :
diviser la valeur en une portion la plus significative et une portion la moins significative ;
dériver un identifiant pour la liaison de signalisation à partir de la portion la moins significative ; **caractérisé en ce que**
si la valeur est à l'intérieur d'une première plage, dériver un identifiant pour le faisceau sémaphore de signalisation spécifique à partir de la portion la moins significative de la valeur ;
si la valeur est à l'intérieur d'une seconde plage, déterminer une quantité qui est une fonction de la valeur et dériver un identifiant pour le faisceau sémaphore de signalisation spécifique à partir de la portion la plus significative de la quantité, dans lequel la fonction est telle que des valeurs successives du champ de sélection de liaison de signalisation sont mappées à différentes valeurs de l'identifiant du faisceau sémaphore.

2. Procédé selon la revendication 1, dans lequel la fonction est une multiplication modulo 256 par un paramètre fixe.

3. Procédé selon la revendication 2, dans lequel la première plage comprend des valeurs inférieures au paramètre fixe moins 1 et la seconde plage comprend des valeurs supérieures ou égales au paramètre fixe.

4. Procédé selon la revendication 3, dans lequel le paramètre fixe est 33.

5. Procédé selon la revendication 3, dans lequel le paramètre fixe est 17.

6. Procédé selon l'une quelconque des revendications précédentes, dans lequel le point de signalisation est une passerelle de signalisation reliant un réseau SS7 et un réseau IP.

7. Point de signalisation pour un réseau de signalisation comprenant un agencement pour identifier, en utilisant la valeur d'un champ de sélection de liaison de signalisation à l'intérieur d'un message, une liaison de signalisation et un faisceau sémaphore de signalisation pour transférer le message, l'agencement comprenant :
une logique pour diviser la valeur en une portion la plus significative et une portion la moins significative ;
une logique pour dériver un identifiant pour la liaison de signalisation à partir de la portion la moins significative ; **caractérisé par**
une logique pour déterminer si la valeur est à l'intérieur d'une première plage, et si tel est le cas dériver un identifiant pour le faisceau sémaphore de signalisation spécifique à partir de la portion la moins significative de la valeur ;
une logique pour déterminer si la valeur est à l'intérieur d'une seconde plage, et si tel est le cas déterminer une quantité qui est une fonction de la valeur et dériver un identifiant pour le faisceau sémaphore de signalisation spécifique à partir de la portion la plus significative de la quantité, dans lequel la fonction est telle que des valeurs successives du champ de sélection de liaison de signalisation sont mappées à différentes valeurs de l'identifiant du faisceau sémaphore.

8. Point de signalisation selon la revendication 7, dans lequel la fonction est une multiplication modulo 256 par un paramètre fixe.

9. Point de signalisation selon la revendication 8, dans lequel la première plage comprend des valeurs inférieures au paramètre fixe moins 1 et la seconde plage comprend des valeurs supérieures ou égales au paramètre fixe.

10. Point de signalisation selon la revendication 9, dans lequel le paramètre fixe est 33.

11. Point de signalisation selon la revendication 9, dans lequel le paramètre fixe est 17.

12. Point de signalisation selon l'une quelconque des revendications 7 à 11, dans lequel le point de signalisation est une passerelle de signalisation reliant un réseau SS7 et un réseau IP.

13. Procédé selon la revendication 3, dans lequel le paramètre fixe est 33.

14. Procédé selon la revendication 3, dans lequel le paramètre fixe est 17.

15. Produit de programme d'ordinateur pour commander une passerelle de signalisation reliant un réseau SS7 et un point de réseau IP pour identifier, en utilisant la valeur d'un champ de sélection de liaison de signalisation à l'intérieur d'un message, une liaison de signalisation et un faisceau sémaphore de signalisation pour transférer le message au réseau SS7, le produit de programme comprenant des éléments de code de programme pour :
diviser la valeur en une portion la plus significative et une portion la moins significative ;
dériver un identifiant pour la liaison de signalisation à partir de la portion la moins significative ; **caractérisé en ce que** les éléments sont agencés pour
si la valeur est inférieure à un paramètre fixe moins 1, dériver un identifiant pour le faisceau sémaphore de signalisation spécifique à partir de la portion la moins significative de la valeur ;
si la valeur est supérieure au paramètre fixe, multiplier la valeur modulo 256 par le paramètre fixe et dériver un identifiant pour le faisceau sémaphore de signalisation spécifique à partir de la portion la plus significative du résultat.

16. Produit selon la revendication 15, dans lequel le paramètre fixe est 33.

17. Produit selon la revendication 15, dans lequel le paramètre fixe est 17.
